# FASCICULE DE BREVET EUROPEEN

(11) **EP 0 623 496 B1**
(45) Date de publication et mention de la délivrance du brevet: **13.08.1997**
(21) Numéro de dépôt: 94105322.5
(22) Date de dépôt: 06.04.1994
(51) Int. Cl.: B60S 1/34

(54) **Essuie-glace équipé d'une cale de montage**
Scheibenwischer mit einem Montagekeil
Windshield wiper equiped with a mounting wedge

(30) Priorité: 08.04.1993 FR 9304186
(43) Date de publication de la demande: 09.11.1994
(73) Titulaire: VALEO SYSTEMES D'ESSUYAGE, 78180 Montigny-Le-Bretonneux (FR)
(72) Inventeur: Basmaison, Frédéric, F-86100 Chatellerault (FR)
(74) Mandataire: Gamonal, Didier

(56) Documents cités:
- EP-A- 0 489 629
- DE-A- 3 809 966
- DE-A- 3 810 017
- FR-A- 2 629 030
- US-A- 4 050 832

## Description

La présente invention concerne un essuie-glace, notamment de véhicule automobile.

L'invention concerne plus particulièrement un essuie-glace du type comportant un bras d'essuie-glace qui porte au moins un balai d'essuyage et qui est monté articulé, autour d'un axe d'articulation, sur une tête d'entraînement du bras d'essuie-glace et comportant au moins un ressort agencé entre la tête d'entraînement et le bras d'essuie-glace.

Lorsqu'un tel essuie-glace est monté sur un véhicule et que le véhicule n'est pas utilisé, soit qu'il se trouve sur la chaîne d'assemblage du véhicule, soit qu'il stationne sur un parc de stationnement pendant une très longue période avant sa commercialisation et pendant son transport, l'effort qu'exerce le ressort sur le bras d'essuie-glace, qui permettra ultérieurement d'obtenir un couple d'essuyage nécessaire au bon fonctionnement de l'essuie-glace, applique en permanence la lame d'essuyage portée par le balai d'essuyage contre la vitre, ou contre une partie de carrosserie en vis-à-vis de l'essuie-glace.

Le maintien de la force d'appui sur la lame d'essuyage accroît le vieillissement de celle-ci.

Il a déjà été proposé, notamment dans le document FR-A-2 629 030, d'interposer une cale entre une portion de la face supérieure du corps de la tête d'entraînement et une portion en vis-à-vis de la portion d'extrémité du bras d'essuie-glace de manière que l'ensemble constitué par le bras d'essuie-glace, le balai d'essuyage et la lame d'essuyage soit légèrement soulevé par rapport à sa position normale de fonctionnement de manière à éviter que la lame d'essuyage soit appliquée, avec un effort élastique d'appui, contre la vitre lorsque le véhicule n'est pas encore utilisé.

Les conceptions connues d'une telle cale, appelée cale de montage, ne sont pas satisfaisantes dans la mesure où leurs modes de fixation sur l'essuie-glace nécessite un aménagement spécial du bras d'essuie-glace.

De plus, cette cale est spécifique à un bras particulier et il est donc nécessaire de disposer d'une multiplicité de références de cales et de bras dans le cadre de la production industrielle en grande série des véhicules automobiles.

En outre, il est nécessaire de disposer d'un outillage adapté pour pouvoir rendre opérationnel cet essuie-glace après son montage.

Afin de remédier à ces inconvénients, l'invention propose un essuie-glace du type mentionné précédemment (FR-A-2 629 030), à savoir un essuie-glace, notamment de véhicule automobile, du type comportant un bras d'essuie-glace qui porte au moins un balai d'essuyage et qui est monté articulé, autour d'un axe d'articulation, sur une tête d'entraînement du bras d'essuie-glace et comportant au moins un ressort agencé entre la tête d'entraînement et le bras d'essuie-glace, et du tue comportant une cale interposée entre une portion de la face supérieure du corps de la tête d'entraînement et une portion en vis-à-vis de la portion d'extrémité du bras d'essuie-glace articulée sur la tête d'entraînement, caractérisé en ce que la cale est amovible et en ce que la cale se prolonge longitudinalement, en direction de l'autre extrémité du bras d'essuie-glace, par une patte d'accrochage qui coopère avec une surface d'accrochage formée sur le bras d'essuie-glace.

Selon des modes de réalisation de l'invention :
- la patte d'accrochage comporte un corps allongé à l'extrémité duquel est formé un bec d'accrochage ;
- le corps allongé de la patte d'accrochage comporte une portion en saillie latérale qui s'étend en regard du ressort ;
- ladite portion d'extrémité du bras d'essuie-glace articulée sur la tête d'entraînement comporte deux joues latérales parallèles entre lesquelles s'étend l'axe d'articulation et qui sont reliées par un dos ;
- la cale est interposée entre la face supérieure du corps de la tête d'entraînement et la face interne du dos de la portion d'extrémité du bras d'essuie-glace ;
- le corps allongé de la patte d'accrochage se présente sous la forme d'une lame qui s'étend sensiblement parallèlement et le long de la face interne de l'une des joues latérales de la portion d'extrémité du bras d'essuie-glace ;
- ladite portion en saillie latérale qui s'étend en regard du ressort est agencée entre ce dernier et la face interne du dos de la portion d'extrémité du bras d'essuie-glace ;
- le bras d'essuie-glace comporte un corps de bras réalisé sous la forme d'une tige aplatie qui s'étend entre les joues latérales de ladite portion d'extrémité du bras d'essuie-glace et à l'extrémité de laquelle est formée ladite surface d'accrochage pour le bec d'accrochage de la patte d'accrochage de la cale ;
- la cale présente une symétrie de conception par rapport à un plan longitudinal médian de la tête d'entraînement et du bras d'essuie-glace ;
- il comporte deux parties de cale agencées symétriquement par rapport audit plan médian et qui sont reliées entre elles par une patte de liaison ;
- la patte de liaison présente sensiblement la forme d'un U dont chacune des branches latérales est reliée à l'une des pattes d'accrochage, et dont la branche centrale constitue un organe de préhension de la cale ;
- les branches latérales de la patte de liaison s'étendent selon une direction sensiblement perpendiculaire à celle des pattes d'accrochage ;
- ledit ressort est un ressort hélicoïdal qui est reçu entre les faces internes en vis-à-vis des deux pattes d'accrochage.

D'autres caractéristiques et avantages de l'invention apparaîtront à la lecture de la description détaillée qui va suivre pour la compréhension de laquelle on se reportera aux dessins annexé dans lequel :
- La figure 1 est une vue schématique latérale en section partielle d'une partie d'un essuie-glace réalisé conformément aux enseignements de l'invention ;
- la figure 2 est une vue en section selon la ligne 2-2 de la figure 3 de la cale de montage qui équipe l'essuie-glace illustré à la figure 1 ;
- la figure 3 est une vue de dessus de la cale illustrée à la figure 2 ;
- la figure 4 est une vue en section selon la ligne 4-4 de la figure 3 ; et
- la figure 5 est une vue en coupe selon la ligne 5-5 de la figure 3.

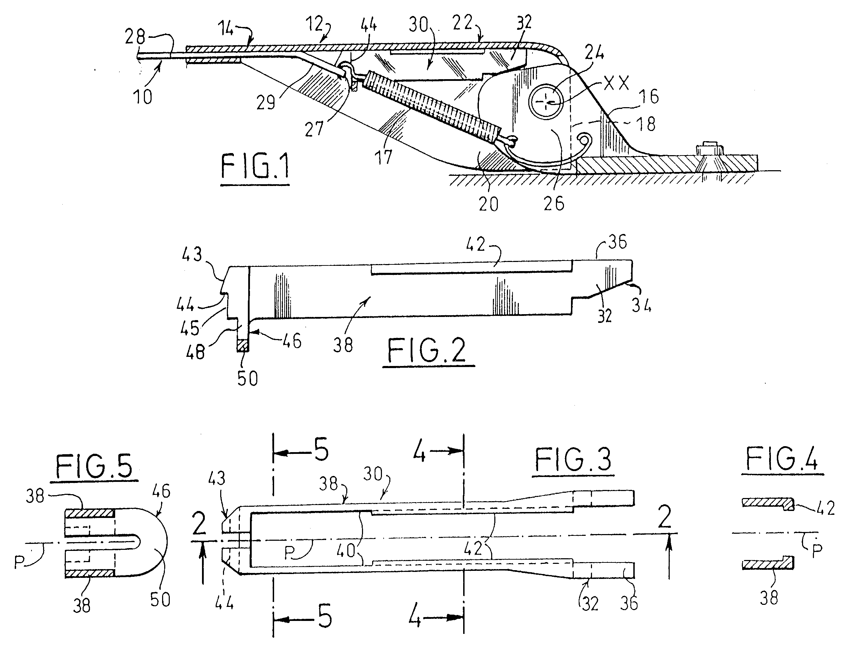

L'essuie-glace 10 schématisé à la figure 1 est pour l'essentiel constitué par un bras d'essuie-glace 12 dont le corps ou carter 14 est monté articulé sur une tête d'entraînement 16 autour d'un axe géométrique d'articulation X-X qui s'étend selon une direction sensiblement perpendiculaire à la direction générale longitudinale du bras d'essuie-glace.

La tête d'entraînement 16 est prévu pour être reliée à un arbre d'entraînement (non représenté) qui provoque son déplacement alternatif autour d'un axe géométrique perpendiculaire à l'axe d'articulation.

Selon un principe connu, un ressort hélicoïdal de traction 17 est agencé entre le bras d'essuie-glace 12 et la tête d'entraînement 16 de manière à appliquer au bras d'essuie-glace 12 un couple d'essuyage qui le sollicite en rotation autour de son axe X-X, dans le sens anti-horaire en considérant la figure 1.

La portion d'extrémité arrière 18 du carter 14 du bras d'essuie-glace 12 présente, en section transversale, une forme générale de U inversé et est constituée par deux joues latérales parallèles 20 reliées entre elles par un dos supérieur 22.

Les joues 20 sont traversées par une tige 24 qui constitue l'axe matériel d'articulation de la portion d'extrémité arrière 18 du carter 14 sur la tête d'entraînement 16 dont le corps 26 est également traversé par la tige 24.

Le bras d'essuie-glace comporte également un corps 28 réalisé sous la forme d'une tige aplatie dont la portion d'extrémité 29 située à l'intérieur de la partie avant du carter 14 sert à l'accrochage de l'extrémité correspondante du ressort 17.

Conformément à l'invention, l'essuie-glace est équipé d'une cale de montage 30.

Comme l'essuie-glace 10, la cale de montage 30 présente une symétrie de conception par rapport à un plan longitudinal médian P de l'essuie-glace.

La cale 30 est constituée par deux parties de cale 32 possédant un profil adapté.

A cet effet, la face inférieure 34 de la partie de cale 32 est inclinée pour coopérer avec la portion de la face supérieure en vis-à-vis du corps 26 de la tête d'entraînement 16, tandis que la face supérieure 36 est une portion de surface plane qui est prévue pour coopérer avec la face interne en vis-à-vis du dos 22 du carter 14 du bras d'essuie-glace 12.

Chaque partie de cale 32 se présente ainsi sous la forme d'un coin qui, en position rabattue du bras, est interposé entre la face supérieure de la tête d'entraînement 16 et la face interne du dos 22 du carter 14.

Chaque partie de cale 32 se prolonge longitudinalement, vers la gauche en considérant les figures 1 à 3, par une patte d'accrochage 38 dont le corps est réalisé sous la forme d'une lame qui s'étend parallèlement au plan médian P et qui est prévu pour s'étendre le long de la face interne de la joue correspondante 20 du carter 14 du bras d'essuie-glace 12.

La partie supérieure de la face interne 40 de chacune des lames 38 comporte une nervure longitudinale 42 qui s'étend en saillie latéralement vers l'intérieur et qui, en position montée de la cale 30, s'étend en regard du ressort 17.

Chaque patte 38 comporte, à son extrémité opposée à la partie de cale 32, un moyen d'accrochage constitué d'un bec d'accrochage 44, délimité par une face verticale 45 et apte à coopérer avec le bord libre 27 de la partie d'extrémité 29 du corps 28 du bras d'essuie-glace 12.

Les deux parties symétriques de la cale 30 sont reliées entre elles, au voisinage des extrémités 43, par une patte de liaison 46 en forme générale de U.

Les deux branches latérales 48 de la patte de liaison 46 s'étendent selon une direction sensiblement perpendiculaire à la direction longitudinale des pattes d'accrochage et sont reliées entre elles par une branche centrale coudée 50 qui constitue une partie de préhension pour un opérateur qui veut mettre la cale 30 en place, ou l'ôter.

La mise en place de la cale de montage s'effectue de la manière suivante.

Après avoir soulevé l'essuie-glace 12, l'opérateur peut introduire la cale 30 en venant mettre les parties de cale 32 en place le long de la face interne du dos 22, le ressort 17 passant entre les lames 38, puis en faisant passer le bec d'accrochage 44 derrière le bord d'extrémité 27 de la tige 29.

La cale ainsi mise en place ne peut pas tomber car elle est de toute manière retenue par les nervures en saillie 42 qui coopèrent avec le corps hélicoïdal du ressort 17.

Lorsque l'opérateur rabat le bras d'essuie-glace 12 pour le ramener dans la position illustrée à la figure 1, les parties de cale 32 viennent s'interposer entre le dos 22 et la partie supérieure de la tête d'entraînement 16 et déterminent ainsi la position angulaire de montage au repos du bras d'essuie-glace 12 par rapport à la tête d'entraînement 16.

La cale 30 ne peut pas s'échapper longitudinalement, vers la gauche en considérant la figure 1, du fait de la coopération de la face verticale 45 qui s'étend en-dessous du bec 44 avec le bord 27 de la portion d'extrémité 29 de la tige 28.

La cale 30 est une pièce qui peut être réalisée venue de matière par moulage en matière plastique et dont le coût est donc particulièrement faible.

## Revendications

1. Essuie-glace (10), notamment de véhicule automobile, du type comportant un bras d'essuie-glace (12) qui porte au moins un balai d'essuyage et qui est monté articulé, autour d'un axe d'articulation (X-X, 24), sur une tête (16) d'entraînement du bras d'essuie-glace (12) et comportant au moins un ressort (17) agencé entre la tête d'entraînement (16) et le bras d'essuie-glace, et du type comportant une cale (30) interposée entre une portion de la face supérieure du corps (26) de la tête d'entraînement (16) et une portion en vis-à-vis (22) de la portion d'extrémité (14, 18) du bras d'essuie-glace articulée sur la tête d'entraînement (16), caractérisé en ce que la cale (30) est amovible et en ce que la cale se prolonge longitudinalement, en direction de l'autre extrémité du bras d'essuie-glace, par une patte d'accrochage (38, 44) qui coopère avec une surface d'accrochage (27) formée sur le bras d'essuie-glace (28, 29).

2. Essuie-glace selon la revendication 1, caractérisé en ce que la patte d'accrochage (38) comporte un corps allongé à l'extrémité duquel est formé un bec d'accrochage (44).

3. Essuie-glace selon la revendication 2, caractérisé en ce que le corps allongé (38) de la patte d'accrochage comporte une portion en saillie latérale (42) qui s'étend en regard du ressort (17).

4. Essuie-glace selon l'une quelconque des revendications précédentes, caractérisé en ce que ladite portion d'extrémité du bras d'essuie-glace articulée sur la tête d'entraînement comporte deux joues latérales parallèles (20) entre lesquelles s'étend l'axe d'articulation (24) et qui sont reliées par un dos (22).

5. Essuie-glace selon la revendication 4, caractérisé en ce que la cale (32) est interposée entre la face supérieure du corps (26) de la tête d'entraînement (16) et la face interne du dos (22) de la portion d'extrémité du bras d'essuie-glace.

6. Essuie-glace selon la revendication 5 prise en combinaison avec l'une des revendications 2 ou 3, caractérisé en ce que le corps allongé (38) de la patte d'accrochage se présente sous la forme d'une lame qui s'étend sensiblement parallèlement et le long de la face interne de l'une des joues latérales (20) de la portion d'extrémité du bras d'essuie-glace.

7. Essuie-glace selon la revendication 5 prise en combinaison avec la revendication 3, caractérisé en ce que ladite portion en saillie latérale (42) qui s'étend en regard du ressort (17) est agencée entre ce dernier et la face interne du dos (22) de la portion d'extrémité du bras d'essuie-glace.

8. Essuie-glace selon l'une quelconque des revendications 4 à 7, caractérisé en ce que le bras d'essuie-glace comporte un corps de bras (28) réalisé sous la forme d'une tige aplatie qui s'étend entre les joues latérales (20) de ladite portion d'extrémité du bras d'essuie-glace et à l'extrémité de laquelle est formée ladite surface d'accrochage (27) pour le bec d'accrochage (44) de la patte d'accrochage de la cale (30).

9. Essuie-glace selon l'une quelconque des revendications précédentes, caractérisé en ce que la cale (30) présente une symétrie de conception par rapport à un plan longitudinal médian de la tête d'entraînement et du bras d'essuie-glace.

10. Essuie-glace selon la revendication 9, caractérisé en ce qu'il comporte deux parties de cale agencées symétriquement par rapport audit plan médian (P) et qui sont reliées entre elles par une patte de liaison (46).

11. Essuie-glace selon la revendication 10, caractérisé en ce que la patte de liaison (46) présente sensiblement la forme d'un U dont chacune des branches latérales (48) est reliée à l'une des pattes d'accrochage, et dont la branche centrale (50) constitue un organe de préhension de la cale.

12. Essuie-glace selon la revendication 11, caractérisé en ce que les branches latérales de la patte de liaison s'étendent selon une direction sensiblement perpendiculaire à celle des pattes d'accrochage.

13. Essuie-glace selon l'une quelconque des revendications 10 à 12, caractérisé en ce que ledit ressort (17) est un ressort hélicoidal qui est reçu entre les faces internes en vis-à-vis des deux pattes d'accrochage.

14. Cale de montage apte à être disposée sur un essuie-glace selon l'une des revendications 1 à 13.

## Claims

1. A screen wiper (10), especially for a motor vehicle, of the type including a screen wiper arm (12) which carries at least one wiper blade and which is articulated about a pivot axis (X-X, 24), on a drive head (16) of the screen wiper arm (12), and including at least one spring (17) interposed between the drive head (16) and the screen wiper arm, and of the type which includes a strut (30) interposed between a portion of the upper surface of the body (26) of the drive head (16) and a portion (22), in facing relationship therewith, of the end portion (14, 18) of the screen wiper arm articulated on the drive head (16), characterised in that the strut (30) is removable, and in that the strut is extended longitudinally towards the other end of the screen wiper arm by a hooking lug (38, 44), which cooperates with a hooking surface (27) formed on the screen wiper arm (28, 29).

2. A screen wiper according to Claim 1, characterised in that the hooking lug (38) comprises an elongate body, at the end of which a hooking nib (44) is formed.

3. A screen wiper according to Claim 2, characterised in that the elongate body (38) of the hooking lug includes a laterally projecting portion (42) which lies facing the spring (17).

4. A screen wiper according to any one of the preceding Claims, characterised in that the said end portion of the screen wiper arm articulated on the drive head has two parallel side elements (20), between which the pivot pin (24) extends, and which are joined together through a spine (22).

5. A screen wiper according to Claim 4, characterised in that the strut (30) is interposed between the upper face of the body (26) of the drive head (16) and the inner face of the spine (22) of the end portion of the screen wiper arm.

6. A screen wiper according to Claim 5 taken in combination with Claim 2 or Claim 3, characterised in that the elongate body (38) of the hooking lug is in the form of a web which extends substantially parallel, and along, the internal face of one of the side elements (20) of the end portion of the screen wiper arm.

7. A screen wiper according to Claim 5 taken in combination with Claim 3, characterised in that the said laterally projecting portion (42) which faces towards the spring (17) is disposed between the latter and the internal face of the spine (22) of the end portion of the screen wiper arm.

8. A screen wiper according to any one of Claims 4 to 7, characterised in that the screen wiper arm includes an arm body (28) in the form of a flattened bar, which extends between the side elements (20) of the said end portion of the screen wiper arm, and on the end portion of which the said hooking surface (27) for the hooking nib (44) of the hooking lug of the strut (30) is formed.

9. A screen wiper according to any one of the preceding Claims, characterised in that the strut (30) has a symmetry of design with respect to a median longitudinal plane of the drive head and of the screen wiper arm.

10. A screen wiper according to Claim 9, characterised in that it includes two strut portions disposed symmetrically with respect to the said median plane (P), the said strut portions being joined together through a connecting lug (46).

11. A screen wiper according to Claim 10, characterised in that the connecting lug (46) is substantially U-shaped, with each of the side branches (48) of the U being joined to one of the hooking lugs, the central branch (50) of the U constituting a gripping member of the strut.

12. A screen wiper according to Claim 11, characterised in that the side branches of the connecting lug extend in a direction substantially at right angles to that of the hooking lugs.

13. A screen wiper according to any one of Claims 10 to 12, characterised in that the said spring (17) is a helical spring which is received between the internal faces, in mutual facing relationship, of the two hooking lugs.

14. A mounting strut adapted to be fitted on a screen wiper in accordance with one of Claims 1 to 13.

## Patentansprüche

1. Scheibenwischer (10), insbesondere für Kraftfahrzeuge, mit einem Scheibenwischerarm (12), der mindestens ein Scheibenwischerblatt trägt und der schwenkbar um eine Gelenkachse (X-X, 24) an einem Befestigungsteil (16) zum Antrieb des Scheibenwischerarms (12) angebracht ist, und mit mindestens einer Feder (17), die zwischen dem Befestigungsteil (16) und dem Scheibenwischerarm angeordnet ist, wobei ein Keil (30) zwischen einem Abschnitt der Oberseite des Körpers (26) des Befestigungsteils (16) und einem gegenüberliegenden Teilstück (22) des mit dem Befestigungsteil (16) gelenkig verbundenen Endabschnitts (14, 18) des Scheibenwischerarms eingefügt ist, **dadurch gekennzeichnet,** daß der Keil (30) abnehmbar ist und daß der Keil in Längsrichtung, in Richtung des anderen Endes des Scheibenwischerarms, durch einen Einhakansatz (38, 44) verlängert wird, der mit einer am Scheibenwischerarm (28, 29) ausgebildeten Einhakfläche (27) zusammenwirkt.

2. Scheibenwischer nach Anspruch 1, **dadurch gekennzeichnet,** daß der Einhakansatz (38) einen länglichen Körper umfaßt, an dessen Ende eine Einhaknase (44) ausgebildet ist.

3. Scheibenwischer nach Anspruch 2, **dadurch gekennzeichnet,** daß der längliche Körper (38) des Einhakansatzes einen seitlich vorspringenden Abschnitt (42) umfaßt, der sich gegenüber der Feder (17) erstreckt.

4. Scheibenwischer nach einem der vorangehenden Ansprüche, **dadurch gekennzeichnet**, daß der besagte mit dem Befestigungsteil gelenkig verbundene Endabschnitt des Scheibenwischerarms zwei parallele Seitenstücke (20) umfaßt, zwischen denen sich die Gelenkachse (24) erstreckt und die durch einen Rücken (22) miteinander verbunden sind.

5. Scheibenwischer nach Anspruch 4, **dadurch gekennzeichnet,** daß der Keil (32) zwischen der Oberseite des Körpers (26) des Befestigungsteils (16) und der Innenseite des Rückens (16) des Endabschnitts des Scheibenwischerarms eingefügt ist.

6. Scheibenwischer nach Anspruch 5 in Kombination mit einem der Ansprüche 2 oder 3, **dadurch gekennzeichnet,** daß der längliche Körper (38) des Einhakansatzes in Form einer Leiste ausgebildet ist, die sich in etwa parallel und entlang der Innenseite eines der Seitenstücke (20) des Endabschnitts des Scheibenwischerarms erstreckt.

7. Scheibenwischer nach Anspruch 5 in Kombination mit Anspruch 3, **dadurch gekennzeichnet,** daß der besagte seitlich vorspringende Abschnitt (42), der sich gegenüber der Feder (17) erstreckt, zwischen dieser und der Innenseite des Rückens (22) des Endabschnitts des Scheibenwischerarms angeordnet ist.

8. Scheibenwischer nach einem der Ansprüche 4 bis 7, **dadurch gekennzeichnet**, daß der Scheibenwischerarm einen Armkörper (28) umfaßt, der in Form eines abgeflachten Stabs ausgeführt ist, welcher sich zwischen den Seitenstücken (20) des besagten Endabschnitts des Scheibenwischerarms erstreckt und an dessen Ende die besagte Einhakfläche (27) für die Einhaknase (44) des Einhakansatzes des Keils (30) ausgebildet ist.

9. Scheibenwischer nach einem der vorangehenden Ansprüche, **dadurch gekennzeichnet**, daß der Keil (30) eine Gestaltungssymmetrie, bezogen auf eine Längsmittelebene des Befestigungsteils und des Scheibenwischerarms, aufweist.

10. Scheibenwischer nach Anspruch 9, **dadurch gekennzeichnet,** daß er zwei Keilteile umfaßt, die symmetrisch, bezogen auf die besagte Mittelebene (P), angeordnet und durch einen Verbindungsansatz (46) miteinander verbunden sind.

11. Scheibenwischer nach Anspruch 10, **dadurch gekennzeichnet,** daß der Verbindungsansatz (46) in etwa die Form eines U aufweist, dessen Seitenschenkel (48) jeweils mit einem der Einhakansätze verbunden sind und dessen Mittelschenkel (50) ein Grifforgan für den Keil bildet.

12. Scheibenwischer nach Anspruch 11, **dadurch gekennzeichnet,** daß sich die Seitenschenkel des Verbindungsansatzes entlang einer Richtung erstrecken, die in etwa senkrecht zur Richtung der Einhakansätze verläuft.

13. Scheibenwischer nach einem der Ansprüche 10 bis 12, **dadurch gekennzeichnet,** daß die besagte Feder (17) eine Schraubenfeder ist, die zwischen den gegenüberliegenden Innenflächen der beiden Einhakansätze angeordnet ist.

14. Montagekeil, der an einem Scheibenwischer nach einem der Ansprüche 1 bis 13 angeordnet werden kann.
